# EUROPEAN PATENT SPECIFICATION

(11) **EP 4 044 410 B1**
(45) Date of publication and mention of the grant of the patent: **02.04.2025**
(21) Application number: 21156791.2
(22) Date of filing: 12.02.2021
(51) Int. Cl.: H02K 5/20, H02K 5/16, H02K 9/193

(54) **LIQUID COOLED ELECTRIC MOTOR**
FLÜSSIGKEITSGEKÜHLTER ELEKTROMOTOR
MOTEUR ÉLECTRIQUE À REFROIDISSEMENT LIQUIDE

(43) Date of publication of application: 17.08.2022
(73) Proprietor: ABB Schweiz AG, 5400 Baden (CH)
(72) Inventor: Secondo, Giulio, 16125 Genova (IT)
(74) Representative: De Bortoli, Tiziano

(56) References cited:
- WO-A1-2006/042832
- WO-A1-2019/165524
- DE-U1- 20 216 113
- JP-A- 2016 010 183

## Description

The present invention refers to the field of manufacturing of rotary electric machines, in particular rotary electric motors. More precisely, the present invention relates to an electric motor provided with liquid cooling means to avoid overheating.

An electric motor is an electrical machine able to convert electrical energy into mechanical energy. More precisely an electric motor produces a linear or a rotary force (torque) which is transferred to an external device, system or mechanism by a mechanical connection. The electric motors are classified in two main groups: linear motors and rotary motors. As known, a rotary electric motor typically comprises a hollow frame that develops along a longitudinal axis so as to define a longitudinal cavity inside which an annular stator assembly is arranged. A first endshield and a second endshield are rigidly fixed to the frame at opposite end thereof. A rotor is supported by the two endshields at its opposite ends so as to rotate coaxially and internally to the stator.

According to a first known solution, an electric motor is provided with air cooling means comprising an axial fan arranged inside a cavity defined in one of the two endshields. The axial fan is mounted on the rotor shaft at one end opposite to the one used to transfer the mechanical torque to an external device or system. The frame is provided with axial fins protruding outwards in order to increase the exchange surface useful to dissipate heat generated during the operation of the electric motor. The air motion is induced by the rotation of the rotor. Indeed, following such a rotation, the axial fan blows up air on the outer surface of the frame so as to reduce its temperature by convention.

This solution is typically provided on constant speed electric motor. According to a different solution, usually installed on variable speed electric motors, an axial fan is arranged in a cavity of an endshield and operated independently from the rotor, by means of another motor. In this case, the air is usually blown up across the stator and/or frame axial channels. **In** some cases, the air may be blown also up on the rotor and the overhangs. **In** some known embodiments, the frame has a rectangular section, considered in a plane orthogonal to the rotor axis, and it is provided with axial channels each of which provided at a corresponding corner of the section.

As a fact, the most of the electric motors on the market are air cooled. However, in some applications, for example in the field extrusion plastic processes wherein the use of air is a critical factor in terms of environmental cleanliness or whenever the noisiness has to be minimized, liquid cooled electric motors are preferred. Typically, water, glycol or oil are used as cooling fluids. According to a first known embodiment, the cooling is obtained by means of a liquid jacket or a coil pipe that surrounds the frame of the motor in which the stator and the rotor are arranged. Examples of known liquid cooled electric motors are disclosed in JP 2016010183 and WO 2006/042832.

According to a further known embodiment, the liquid cooling system comprises a plurality of pipes each of which inserted in a corresponding channel longitudinally defined through the frame of the electric motor. Overall, these pipes define a cooling circuit by means of which the cooling fluid subtracts heat from the frame. Indeed, the heat is transmitted from the frame to the pipes by conduction and then from the pipes to the cooling fluid by convection.

In order to allow the circulation along the pipes, the latter are mutually connected each other at their ends. On this regard, according to a known solution, the body of the endshields is machined so as to define a plurality of connecting channels each of which hydraulically connects two ends of different pipes. These channels are obtained close to the surface of the endshield addressed to be connected to the frame and their axis of development lay on a plane orthogonal to the longitudinal axis. These channels are connected to the pipes of the frame by means of axial holes defined longitudinally through the endshield body. The ends of two different pipes are inserted in two corresponding axial holes while appropriate hydraulic plugs are used to close the connecting channel at their end. Therefore, the cooling liquid exiting from a pipe can enter into the connecting channel that diverts it to another pipe. The hydraulic plugs avoid the liquid to exit from the connecting channel, i.e., from the endshield.

Usually, since the diameter of the connecting channels as well as the diameter of the pipes through the frame cannot be much increased, in order to guarantee a sufficient cooling effect, the motor is designed so as to have the highest number of them. This solution allows to increase the length of the hydraulic circuit so as to compensate the relatively low flow rate circulating along the pipes and connecting channels and imposed by their diameter. However, overall, this technical solution is particularly complex and is a critical aspect in terms of manufacturing times and of costs. Further, several sealing interfaces (e.g., O-Rings or other similar devices) have to be provided to guarantee the correct sealing between the different components in mutual contact. The higher the number of sealing interfaces, the higher is the complexity, the time needed to assemble and the risk of failure (e.g., an O-ring wrongly mounted or missing). This in turn requires an accurate sealing test after the whole assembling and a complex recovery procedure if the test goes wrong. Moreover, the pipes must be inserted by pressing them to achieve a good contact with the stator laminations. Alternatively, they can be easily inserted with small interference but this leads to a very poor heat conduction characteristic.

### SUMMARY

The main aim of the present invention is providing a liquid cooled electric motor which makes it possible to overcome or mitigate the aforementioned problems of the known art.

In the context of this aim, an object of the present invention is providing a liquid cooled electric motor that allows to simplify the manufacturing of the endshields at least for what concerns the liquid fluid circulation therein.

Another object of the present invention is providing a liquid cooled electric motor that can be easily configurated, in terms of hydraulic cooling circuit, depending on the use and/or of the space available for its installation.

A further object is providing a liquid cooled electric motor easy to manufacture at industrial level, at competitive costs with similar electric motors of the state of the art.

This aim and these objects, together with other objects that will become evident from the following description and accompanying drawings, are achieved, according to the present invention, by a cooled electric motor, according to claim 1 and the related dependent claims set out below.

In a general definition, a liquid cooled electric motor, according to the invention, comprises:
- a frame that develops along a longitudinal axis;
- a first endshield and a second endshield connected at opposite ends of said frame;
- a stator assembly and a rotor assembly, wherein said stator assembly is arranged, at least partially, in a longitudinal cavity of said frame and wherein said rotor assembly is arranged in a longitudinal space defined by said stator assembly and supported, at opposite ends, by said endshields so as to rotate about said longitudinal axis;
- liquid cooling means to dissipate the heat generated during the operation of said electric motor, wherein said cooling means comprise a plurality of circulation channels defined through said frame for the circulation of a cooling fluid, and at least one hydraulic connecting channel for connecting hydraulically two of said circulation channels at one of said endshields.

The electric motor according to the invention is characterized in that said hydraulically connecting channel comprises at least a first section configured by the coupling of a collector element with a seat defined by one of said endshields. The seat has a coupling surface that develops around said longitudinal axis, said collector being a ring-shaped body with an outer surface and an inner surface, wherein said outer surface couples with the coupling surface of the seat, wherein said outer surface and said coupling surface are shaped so as to configure the first section of said connecting channel following their coupling.

According to an embodiment, said hydraulic connecting channel comprises a second section and a third section wherein said first section is comprised between said second section and said third section, wherein said second section and said third section make said first section communicating with a corresponding of said circulation channels.

According to a preferred embodiment, said ring-shaped body comprises a slot which develops from the outer surfaces along an angular sector around said longitudinal axis, wherein said first section of said hydraulic connecting channel is configured by the coupling surface of the seat and by the surfaces defining such at least one slot.

According an embodiment, said second section and said third section are defined by two cavities each of which communicates with at least one of said circulation channels, and wherein at least two of said cavities comprises a corresponding opening that makes the corresponding cavities communicating with the first section of said hydraulic connecting channel.

Preferably, said one of said endshields comprises four cavities each of which communicates with at least one of said circulation channels, and wherein each of the cavities comprises a corresponding opening at the coupling surface; the ring-shaped body is coupled with said seat so that the slot communicates with two of said cavities by the corresponding openings. According to a possible embodiment, the ring-shaped body comprises two slots symmetrically defined with respect to a diametral plane containing said longitudinal axis; when the ring-shaped body is coupled with the seat, a first slot hydraulically connects a first cavity with a second cavity while a second slot hydraulically connects a third cavity and the fourth cavity. According to a possible embodiment of the ring-shaped body, the outer surface of said ring-shaped body comprises a first portion and a second portion which are separated by said at least one slot, at least along the angular sector along which it develops; each of the portions comprises at least a circumferential groove that develops for an angle of 360° around the longitudinal axis, wherein such groove accommodates a sealing element.

Preferably, the first portion is closer to the frame than said second portion and wherein said first portion comprises two or more circumferential grooves each of which to accommodate a sealing element.

According to a possible embodiment, the frame has a rectangular shaped cross section, wherein said cross section is considered on a plane orthogonal to said longitudinal axis. According to another embodiment, at least one of said endshields has a prismatic shape defined by four side external surfaces that develop on planes two by two parallel.

Preferably, at least one of the endshields comprises four external open cavities each of which defined at one of its corners, wherein each corner is identified by two external surfaces of the endshield, wherein the open cavities accommodate connecting means to connect said frame to the endshield and/or to connect a hydraulic connector to feed or to discharge the cooling fluid flowing in said circulation channels.

According to a possible embodiment, the frame is obtained by extrusion process and the circulation channels are defined during such extrusion process or alternatively the frame is obtained from a single casting piece as well as the circulation channels are obtained in the casting itself. The frame 5 could be also obtained by means of a 3D printing process.

According to a further embodiment, said plurality of circulation channels comprises a first couple, a second couple, a third couple and a fourth couple of circulation channels wherein each of these couples is defined at a corresponding corner of said frame. Preferably, for at least one of the couples of the circulation channels, the channels are symmetrically arranged with respect to a radial plane containing the longitudinal axis, wherein the radial plane is a symmetric plane also for the corresponding corner.

### LIST OF DRAWINGS

Further characteristics and advantages of the invention will emerge from the description of preferred, but not exclusive embodiments of an electric motor according to the present disclosure, non-limiting examples of which are provided in the attached drawings, wherein:
- figure 1 is a first perspective view of an electric motor according to the present invention;
- figure 1A is a partially exploded view of the electric motor of Figure 1;
- figure 2 is a second perspective view of the electric motor of Figure 1;
- figure 2A is a partially exploded of the electric motor of Figure 2;
- figures 3 and 3A are section views respectively of a first terminal part and a second terminal part, opposite to the first one, of the electric motor of Figure 1 according to the section plane III-III of Figure 1;
- figures 4 and 5 are a first section view and a second section view respectively according to section planes IV-IV and V-V of Figure 2;

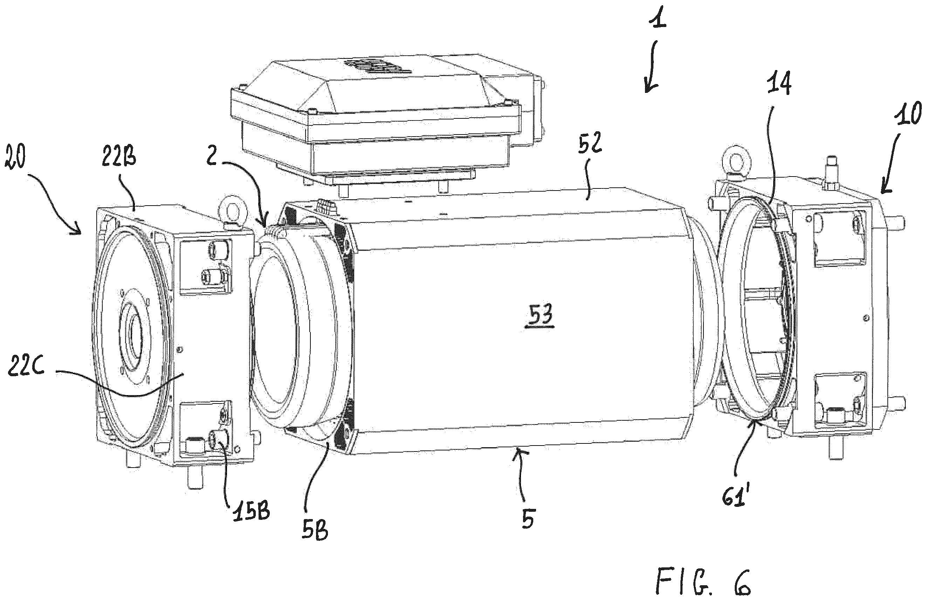

- figure 6 is a further exploded view of the electric motor of Figure 1;
- figure 7 is a view of a first group of components of the electric motor of Figure 1;
- Figure 8 and 9 are views from different points of view of some components of the first group of Figure 7;
- Figures 10 and 11 are views from different points of view of a second group of components of the electric motor of Figure 1;
- Figure 12 is a view of some components of the second group of Figures 10 and 11;
- Figures 13 and 14 are respectively a prospective view and a section view of a first embodiment of a component of an electric motor according to the invention;
- Figures 15 and 16 are respectively a prospective view and a section view of a second embodiment of said component of an electric motor according to the invention;
- Figures 17A, 17B, 17C are prospective view of the electric motor of Figure 1 showing a first possible cooling mode thereof;
- Figures 18A and 18B are two prospective view of the electric motor of Figure 2 showing a second possible cooling mode thereof.

### DETAILED DESCRIPTION

Referring to the above-mentioned figures, the present invention relates to a liquid cooled electric motor 1, preferably having a variable rotational speed. The electric motor 1 comprises a frame 5 that develops along a longitudinal axis 500 and two endshields 10, 20 that are connected at opposite ends of the frame 5. Preferably, the frame 5 is defined by an extruded body made of metallic material, preferably made of aluminum.

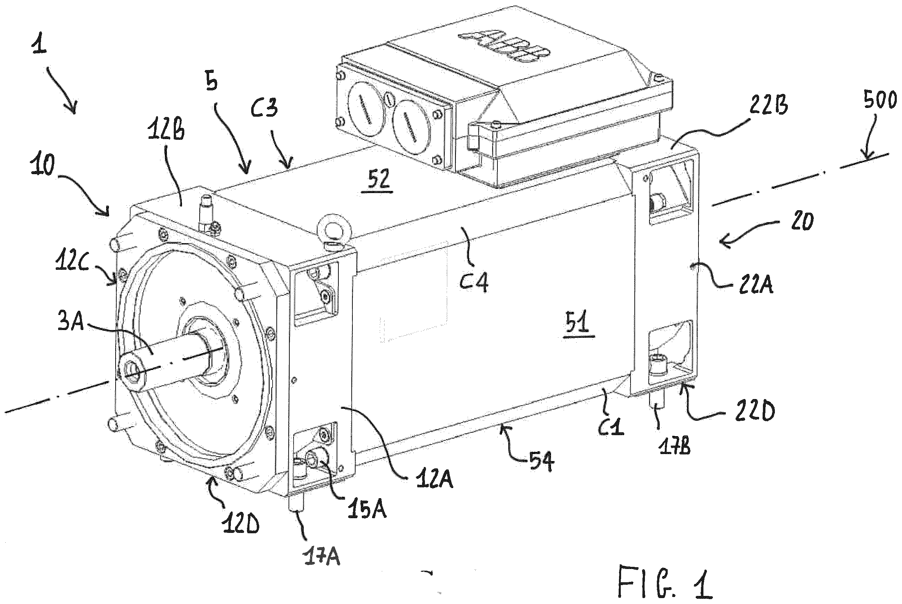

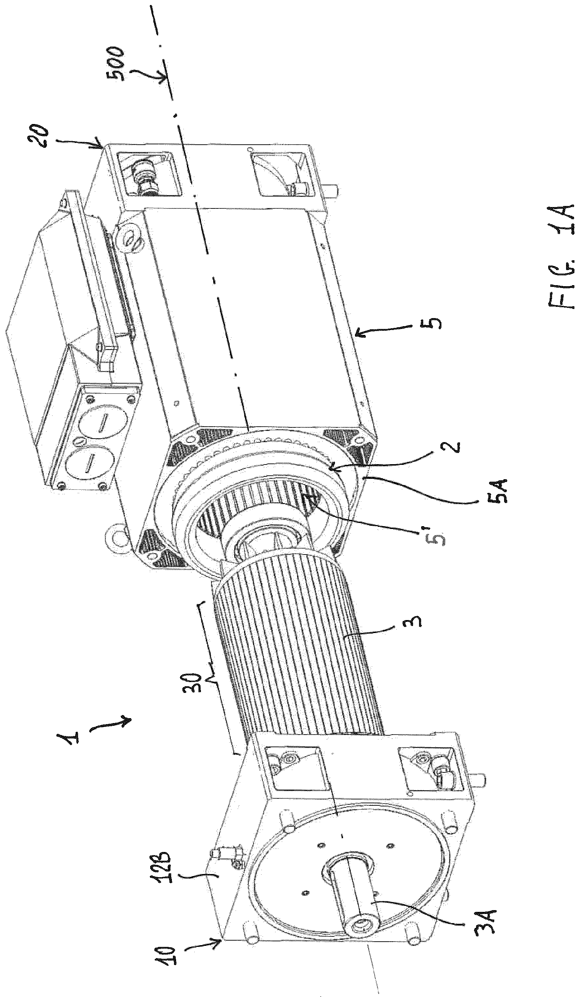

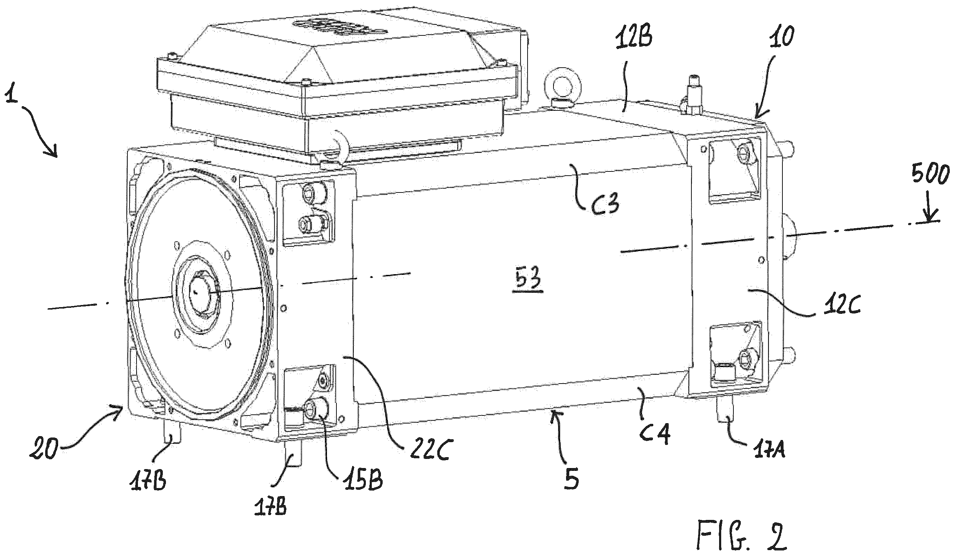

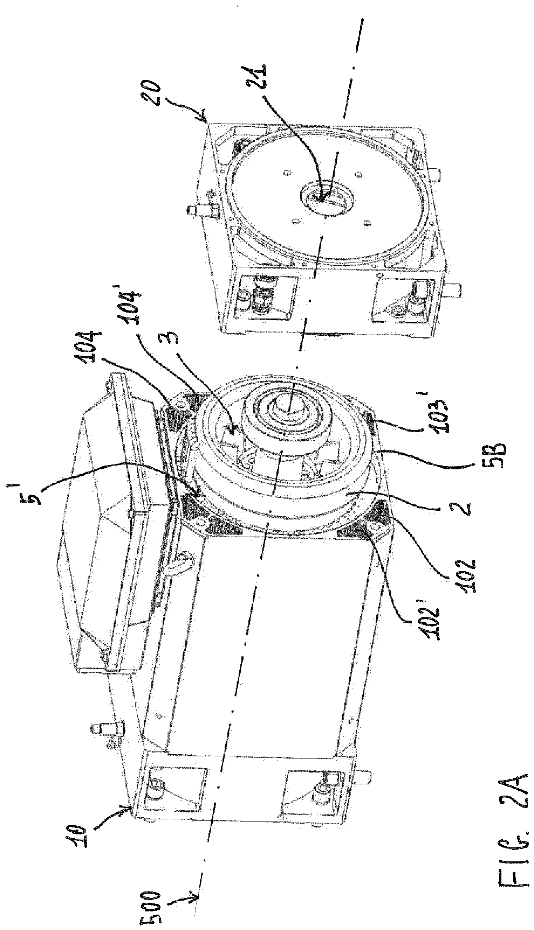

The frame 5 has a first end surface 5A and a second end surface 5B that develop orthogonally to the longitudinal axis 500 and whose mutual distance defines the longitudinal length of the frame 5. On this regard, such a length may vary depending on the size of the electric motor 1. Also, the shape of the transversal section (namely the section considered on a plane orthogonal to the longitudinal axis 500) of the frame 5 may vary as a function, for example, of the installation for which the electric motor is designed. Preferably, the transversal section has a rectangular shape, more preferably a square shape, with four blunt corners C1, C2, C3, C4 (see for example Figures 1, 1A, 2 and 2A). This means the frame 5 comprises four main external surfaces 51, 52, 53, 54 that lay on planes two by two parallel.

The electric motor 1 also comprises a stator assembly 2 and a rotor assembly 30. According to a solution known *per se,* the stator assembly 2 is arranged, at least partially, in a longitudinal cavity 5' (indicated in Figures 1A and 2A) defined by the extruded body of the frame 5. The rotor assembly 30 is arranged in a cylindrical longitudinal space defined by the stator assembly 2. The configuration of the stator assembly 2 and/or the rotor assembly 30 are not relevant for the present invention. A skilled person is aware of possible configurations that such assemblies may assume in this kind of electric motors.

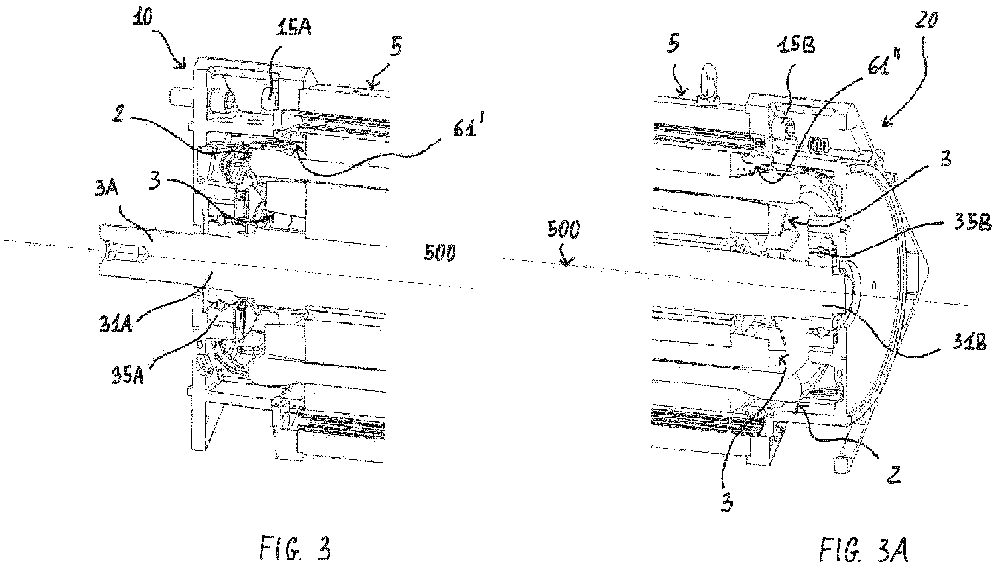

In any case, the rotor assembly 30 comprises a rotor 3 which is supported, at opposite terminal parts 31A-31B, by the endshields 10,20 so as to rotate about the longitudinal axis 500. More precisely, the rotation is allowed by bearing means 35A-35B (see Figures 3-3A) interposed between a corresponding terminal part 31A, 31B of the rotor 3 and a corresponding of said endhields 10,20. A drive end 3A of the rotor 3 protrudes outside one of the two endshields to be connected to transfer the rotary force (torque) to an external device, system or mechanism, according to a solution known *per se.* In the figures, the endshield from which the drive end 3A protrudes is indicated with the reference 10 and with the acronym DE 10 in the present description. Instead, the other endshield, opposed to the DE, is indicated with the reference number 20 in the figures and with the acronym NE 20 in the present description.

The electric motor 1 comprises first connecting means 15A and second connecting means 15B for connecting the DE 10 and the NE 20, respectively, to a corresponding end surface 5A-5B of the frame 5. In the embodiment shown in the Figures, the DE 10 is connected to the first surface 5A by first connecting means 15A and the NE 20 is connected to the second surface 5B by second connecting means 15B (see for example Figures 1, 2, 3, 3A). More in detail, both the connecting means 15A-15B (first and second) comprise a plurality of axial bolts longitudinally screwed in the frame 5, namely according to a direction parallel to the longitudinal axis 500.

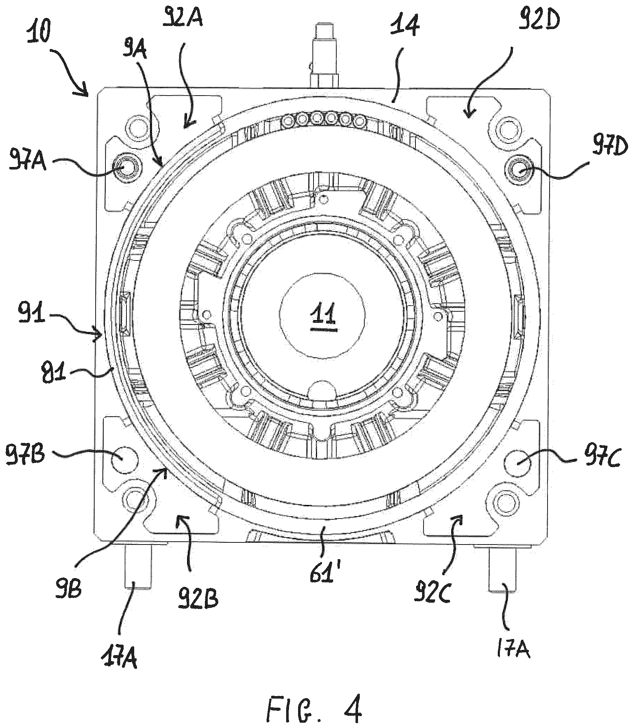

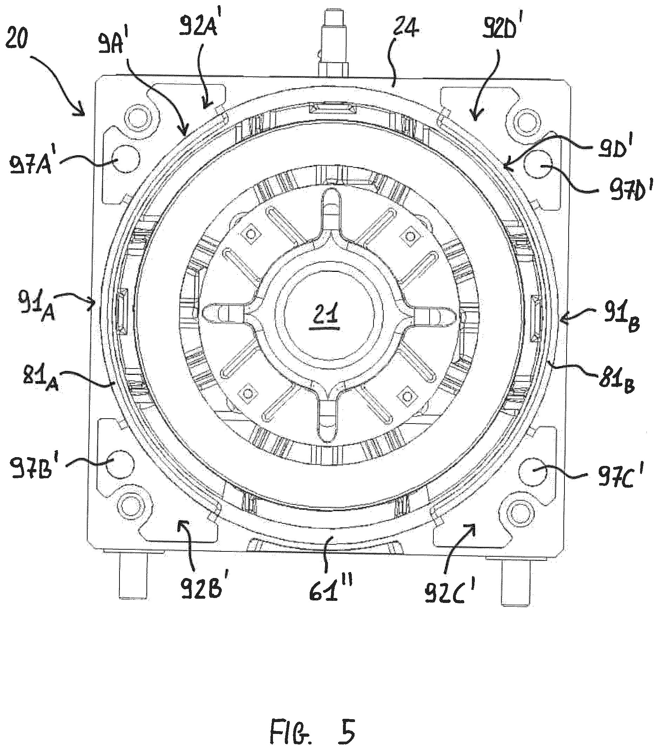

Each of the two endshields (DE 10, NE 20) comprises a body with an internal cavity 11, 21 (see Figures 4 and 5) in which corresponding bearing means 35A, 35B are arranged to support the rotor 3, as above indicated (see Figures 3 and 3A). More precisely, at least the internal cavity 11 of the DE 10 develops through the entire axial length thereof to allow the drive end 3A of the rotor 3 to protrude outside (see figures 1, 3 and 10 in combination).

Each of the endshields DE 10, NE 20 further comprises a transversal coupling surface 14, 24 which is stably in contact with a corresponding end surface 5A, 5B of the frame 5 due to the fixing action of the corresponding connection means 15A, 15B. For this purpose, each of the transversal coupling surfaces 14,24 develops on a plane orthogonal to the longitudinal axis 500. Preferably, a sealing element (not shown in the figures) is placed between the transversal coupling surface 14, 24 of each endshields 10,20 and the corresponding end surface 5A, 5B of the frame 5. The sealing element (for example made of paper for seals) has the purpose to seal off, at the endshields 10,20, the liquid cooling means provided for cooling the electric motor 1.

According to a possible embodiment, the two endshields 10, 20 have a prismatic shape defined by four side external surfaces 12A, 12B, 12C, 12D-22A, 22B, 22C, 22D that develop on planes two by two parallel. Preferably, for each of the two endshields 10, 20, each external surface 12A, 12B, 12C, 12D-22A, 22B, 22C, 22D develops on a plane that is parallel to one on which an external surface 51, 52, 53, 54 of said frame 5 develops.

In the embodiment shown in the figures, the first connecting means 15A comprise four axial bolts each of which arranged at a corner of the first end surface 5A of the frame 5 and of the corresponding transversal surface 14 of the DE 10. A similar solution is provided, *mutatis mutandis,* also for the second connecting means 15B that connects the second end surface 5B to the transversal surface 24 of the NE 20. However, a different number of bolts could be provided for the first connecting means 15A and for the second connection means 15B.

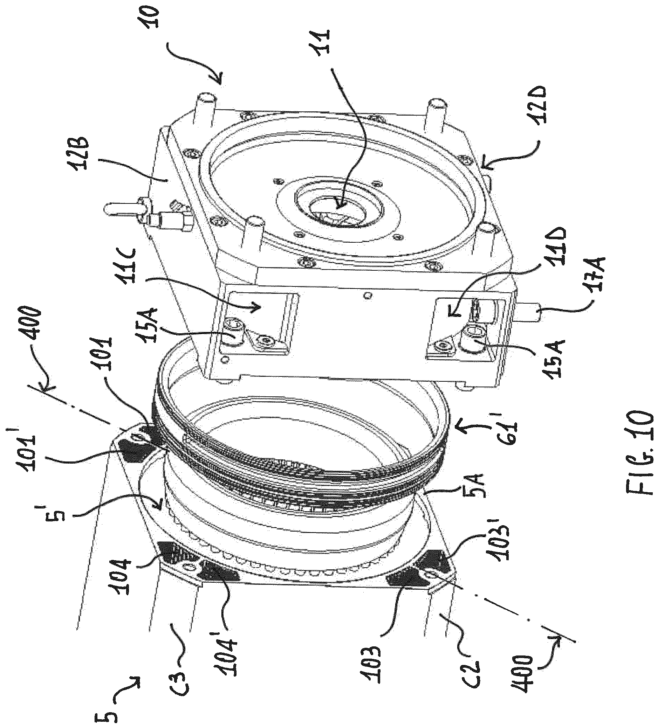

As shown in figures 10-12, the DE 10 comprises four external open cavities 11A, 11B, 11C, 11D each of which defined at one of its corners, wherein each corner is identified by two external surfaces 12A, 12B, 12C, 12D of the DE 10 lying on orthogonal planes. These cavities 11A, 11B, 11C, 11D are provided for positioning the connecting means 15A (axial bolts) and, in the case, for positioning hydraulic connectors used to feed or to discharge the circulation channels 101, 101', 102, 102', 103, 103', 104, 104' of liquid cooling means as below described. Further, the cavities 11A, 11B, 11C, 11D may be advantageously used for arranging fixing means (for example fixing bolts 17A) useful for connecting the DE 10 to a surface and/or to another device.

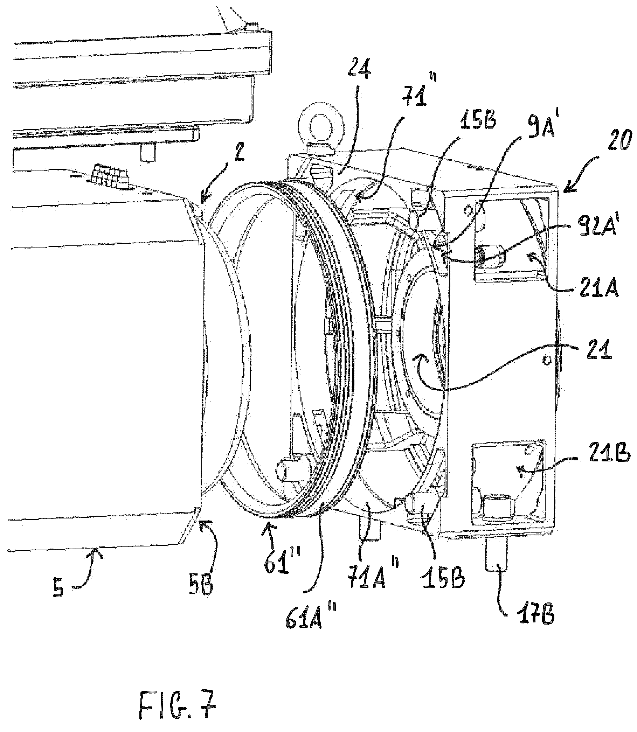

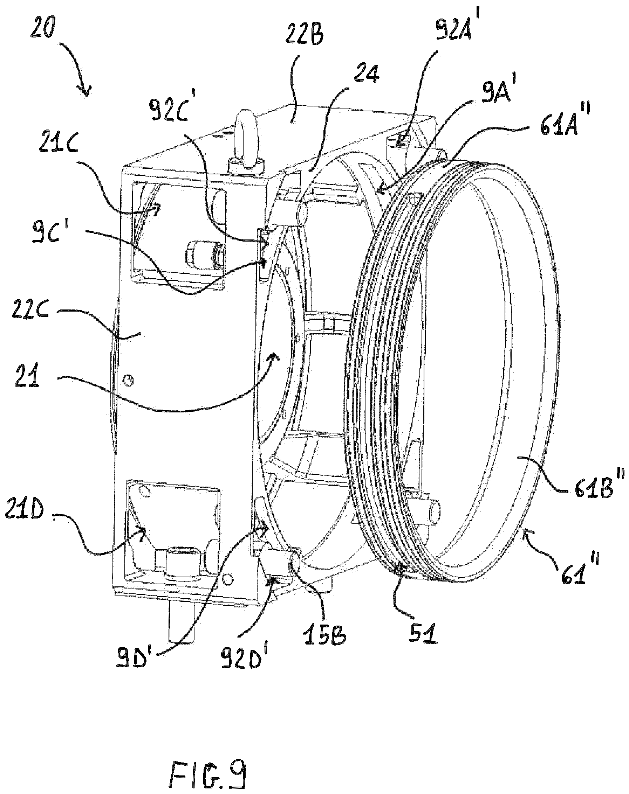

As shown in Figures 7-9 a similar solution is provided for NE 20 that comprises four external open cavities 21A, 21B, 21C, 21D with a similar configuration of those provided for DE 10 and with the same purposes. On this regard, each of the external open cavities 21A, 21B, 21C, 21D is defined at one of the corners of the DE 20, wherein each corner is identified by two external surfaces 22A, 22B, 22C, 22D lying on orthogonal planes; further, each of the external open cavities 21A, 21B, 21C, 21D is opened on a corresponding side external surface 22A, 22C and on a surface opposite to the transversal coupling surface 24 of the NE 20. The external open cavities 21A, 21B, 21C, 21D are provided for positioning connecting means 15B, hydraulic connectors 151, 161, 171', 171" and/or fixing means 17B.

The electric motor 1 according to the invention comprises liquid cooling means to dissipate heat generated during its operation. Such a cooling means comprise a plurality of circulation channels 101, 101', 102, 102', 103, 103', 104, 104' for the circulation of a cooling fluid, preferably, but non exclusively, water. These circulation channels 101, 101', 102, 102', 103, 103', 104, 104' are preferably defined directly by the frame 5 so that the cooling liquid, flowing along the channels, exchanges heat directly with the frame 5.

Preferably, these circulation channels 101, 101', 102, 102', 103, 103', 104, 104' are axially oriented, i.e., they develop mainly along a direction parallel to the longitudinal axis 500. On this regard, the circulation channels 101, 101', 102, 102', 103, 103', 104, 104' are preferably defined during the extrusion process by means of which the frame 5 is obtained. Alternatively, they can be obtained by machining the frame 5, that is by drilling it longitudinally. As above, the frame 5 could be obtained by an extrusion process, a casting process or a 3D printing process or any other process suitable for the purpose.

According to an alternative embodiment (not shown in the figures), the circulation channels can be defined by pipes inserted in corresponding longitudinal holes defined through the frame 5. In this case, the heat exchange between the cooling fluid and the frame is *"indirect"* due to the interface of the pipes along which the fluid flows.

In view of what above, for the purposes of the present invention the expression *"circulation channel"* wants generally to indicate a channel which crosses longitudinally (i.e., parallelly to the longitudinal axis 500) the frame 5 and along which the cooling fluid flows to exchange heat *"directly"* or *"indirectly"* with the frame in order avoid the overheating thereof.

In the embodiment shown in the figures, the frame comprises a first couple 101-101', a second couple 102-102', a third couple 103- 103' and a fourth couple 104-104' of circulation channels wherein each of these couples is defined at a corresponding corner of the frame 5 as it can be seen in Figures 10-12 showing the end surface 5A of the frame 5 addressed to be connected to the contacting surface 14 of the DE 10.

For each of said couples of circulation channels 101-101', 102-102', 103-103', 104-104', the two channels are symmetrically arranged with respect to a radial plane 400 containing the longitudinal axis 500, wherein said radial plane 400 is a symmetric plane also for the corresponding corner C1, C2, C3, C4.

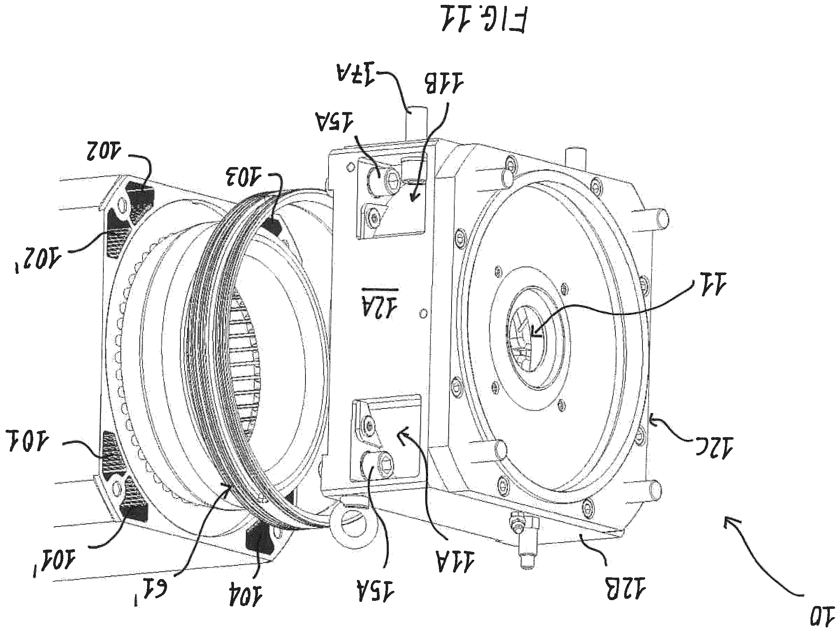

Always with reference to figures 10 and 11, the transversal section (perpendicular to axis 500) of the circulation channels 101-101', 102-102', 103-103', 104-104' has a polygonal shape so as to occupy as mush as possible the area of the corresponding corner, i.e. area of the transversal section comprised between the two external surfaces of the 51, 52, 53, 54 of the frame 5 identifying the corner C1, C2, C3, C4 and the internal cavity 5' of the frame itself. This solution allows to increase the flow rate of the cooling liquid usable.

Further, as shown in figure 11, the circulation channels 101-101', 102-102', 103-103', 104-104' are preferably finned inwardly. This solution allows to increase the heat exchange surface with the cooling fluid. The fins can be easily obtainable by means of the extrusion process used to manufacture the frame 5.

According to the invention, the cooling means comprise at least a hydraulic connecting channel 91, 91_{A},91_{B} (see Figures 4 and 5) defined in one of the endshields 10, 20 for connecting hydraulically two of the circulation channels 101-101', 102-102', 103-103', 104-104'. The expression *"defined in"* wants to indicate that the connecting channel is comprised in the space occupied by a corresponding endshields 10, 20, i.e. the space delimited by its external surfaces 12A-12B-12C-12D, 22A-22B-22C-22D. Further, for the purposes of the present invention, the expression *"connecting channel"* wants to indicate generally a *"space"* or a *"conduit"* in which the cooling fluid exiting from a circulation channel can flow up to the entry of another circulation channel, independently from the shape and of such a space/conduit.

According to the present invention, the hydraulic connecting channel 91, 91_{A},91_{B} comprises at least a first section 81,81_{A},81_{B} defined by the coupling of a collector element 61', 61" with a seat 71', 71" defined by the body of said one of the endshields 10, 20. In other words, the collector element 61', 61" and the seat 71', 71" are shaped so that the first section 81,81_{A},81_{B} of the channel 91, 91_{A},91_{B} is defined only following their coupling.

Therefore, according to the invention, the hydraulic communication between two of said circulation channels 101-101', 102-102', 103-103', 104-104' is obtained by the coupling of at least two components (one of the endshields 10,20 and a collector element 61', 61") which are manufactured separately. This technical solution allows to simplify the machining of the endshields and consequently the costs and times for this operation. Further, this solution allows to increase the size of the hydraulic connecting channel and consequently to increase the cooling liquid flow rate.

According to an embodiment, shown also in the figures, the hydraulic connecting channel 91, 91_{A},91_{B} comprises also a second section and a third section that make the first section 81,81_{A},81_{B} communicating with a corresponding of said circulation channels 101-101', 102-102', 103-103', 104-104'. In particular, the second section and the third section are preferably defined only by the structure of the corresponding endshields 10, 20.

According to a preferred embodiment shown in the figures, the seat 71', 71" has an annular configuration and develops around the longitudinal axis 500. Preferably, the seat 71', 71" comprises a coupling surface 71A', 71A" whose shape is, at least partially, cylindrical developing around the longitudinal axis 500. The collector element 61', 61" is a ring-shaped body with an outer surface 61A', 61A" and an inner surface 61B', 61B'' wherein the outer surface 61A', 61A" couples with the coupling surface 71A', 71A" of the seat 71', 71". When coupled with the seat 71', 71", the ring-shaped body 61', 61" (i.e., the collector element 61', 61") is coaxial with the longitudinal axis 500.

More precisely, the coupling surface 71A', 71A" of the seat 71', 71" and the outer surface 61A', 61A" of the ring-shaped body 61', 61" are shaped so as to define said first section 81,81_{A},81_{B} of the connecting channel 91, 91_{A},91_{B}. Preferably, the ring-shaped body 61', 61" comprises at least one slot 51', 51'_{A}, 51'_{B} that develops inwardly (i.e. toward the longitudinal axis 500) from the outer surface 61A', 61A". Preferably, such a slot has a U-shape, considered on a radial plane containing the longitudinal axis 500.

The slot 51', 51'_{A}, 51'_{B} develops for a pre-stablished angular sector (angle α) around the longitudinal axis 500. Preferably, this angular sector is less than 180°, as an example the angle can be 120°. Therefore, in such an embodiment, the first section 81,81_{A},81_{B} of the hydraulic connecting channel 91, 91_{A},91_{B} is delimited by the surfaces of said slot 51', 51'_{A}, 51'_{B} and by the cylindrical coupling surface 71A', 71A" of the seat 71', 71" to which the outer surface 61A', 61A" of the ring-shaped body 61', 61" is coupled.

According to an alternative solution, not shown in the figures, the outer surface of the ring-shaped body could be cylindrical while the coupling surface of the seat could be configured so as to define a slot which develops in the endshield body; such alternative solution is conceptually equivalent to the one shown in the figures. In this alternative solution, the first section of the channel would be defined by the surface of the endshield slot and by the outer surface of the cylindrical ring-shaped body.

The figures 7-9 are views showing the NE 20 and the ring-shaped body 61" couplable with the seat 71" of the same NE 20. As shown, the seat 71" develops axially from the transversal coupling surface 24 of NE 20. This means, when the electric motor 1 is assembled, the ring-shaped body 61" is adjacent to the end surface 5B of the frame 5. On this regard, Figure 3A clearly shows the arrangement of the ring-shaped body 61" with respect to the frame 5 and the seat 71" of the NE 20.

According to a preferred embodiment, considering the NE 20, the second section and the third section of the connecting channel are configured by two cavities 92A',92B', 92C', 92D' defined of the NE 20, each of which being hydraulically connected to at least one of the circulation channels 101-101', 102-102', 103-103', 104-104'. Each of the cavities 92A',92B', 92C', 92D' comprises a corresponding opening 9A-9B-9C-9D that makes it communicating with the first section of the connecting channel.

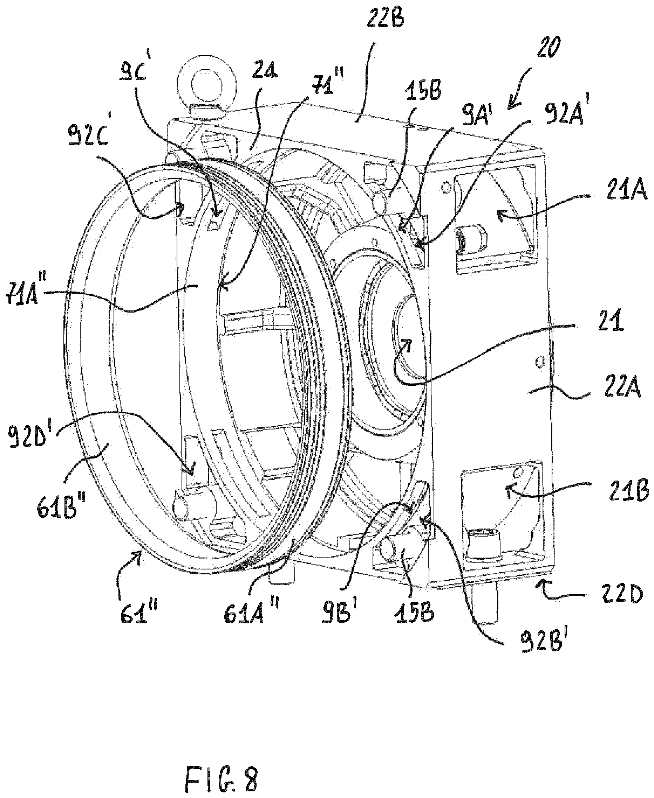

More precisely, in the figures 7-9, the NE 20 comprises four cavities 92A',92B', 92C', 92D' each of which develops axially from the transversal coupling surface 24 of NE 20 (see figure 8). Each of these cavities 92A',92B', 92C', 92D' is located a corner of the NE 20 so as to face a corresponding couple of circulation channels 101-101', 102-102', 103-103', 104-104' (see figures 5 and 8). This allows the cooling fluid to flow from a cavity 92A',92B', 92C', 92D' to the corresponding couple of circulation channels 101-101', 102-102', 103-103', 104-104' or vice versa.

Further, each of these cavities 92A',92B', 92C', 92D' comprises a corresponding opening 9A'-9B'-9C'-9D' at the coupling surface 71A" of said seat 71". The ring-shaped body 61A" is coupled with said seat 71" so that the first section 81_{A},81_{B} of the hydraulic channel 91, 91_{A},91_{B} communicates with two of the four cavities 92A',92B', 92C', 92D' by means of the corresponding openings 9A'-9B'-9C'-9D'. In other words, according to the invention, at least two of the above cavities 92A', 92B', 92C', 92D' of the NE 20 are made hydraulically connected by means of the first section 81_{A},81_{B} of the hydraulic channel 91_{A},91_{B} resulting from the coupling of the slot 51" of the ring-shaped body 61" with the coupling surface 71A" of the seat 71".

On this regard, in the embodiment shown in Figure 5, at the NE 20, the ring-shaped body 61A" is arranged in the seat 71" so as to define two hydraulic connecting channels 91_{A},91_{B}. The two cavities 92A' and 92B' correspond to the second section and the third section of a first hydraulic channel 91_{A} being hydraulically connected by a first slot 51'_{A} of the ring-shaped body 61". Analogously the two cavities 92C' and 92D' are hydraulically connected by a second slot 51'_{B} of the ring-shaped body 61" defining the second section and the third section of a second hydraulic channel 91_{B}.

However, as below better clarified, the angular position of the ring-shaped body 61", chosen for the arrangement in the seat 71", determines which couple of cavities 92A',92B', 92C', 92D' of the NE 20 become hydraulically connected via the first section 81_{A}, 81_{B} of a hydraulic channel 91_{A}, 91_{B}, wherein in any case such a first section is defined by the coupling of the ring-shaped body 61" with the seat 71" of the NE 20.

On this regard, looking in combination figures 2A and 7, at the transversal coupling surface 24 of the NE 20, each cavity 92A',92B', 92C', 92D' has a section geometrically corresponding to that of the cross section of the two circulation channels 101-101', 102-102', 103-103', 104-104' to which it faces. This solution optimizes the cooling liquid flow in both the directions.

Further, each cavity 92A',92B', 92C', 92D' preferably comprises a service opening 97A', 97B', 97C', 97D' for the possible connection of a hydraulic connector 151, 161, 171', 171" useful to supply or to discharge the cooling liquid from the hydraulic circuit defined by the circulation channels 101-101', 102-102', 103-103', 104-104' and the hydraulic connecting channels 91_{A}, 91_{B} (see Figure 5). When any hydraulic connector is not necessary, then such services openings 97A', 97B', 97C', 97D can be closed by a plug element.

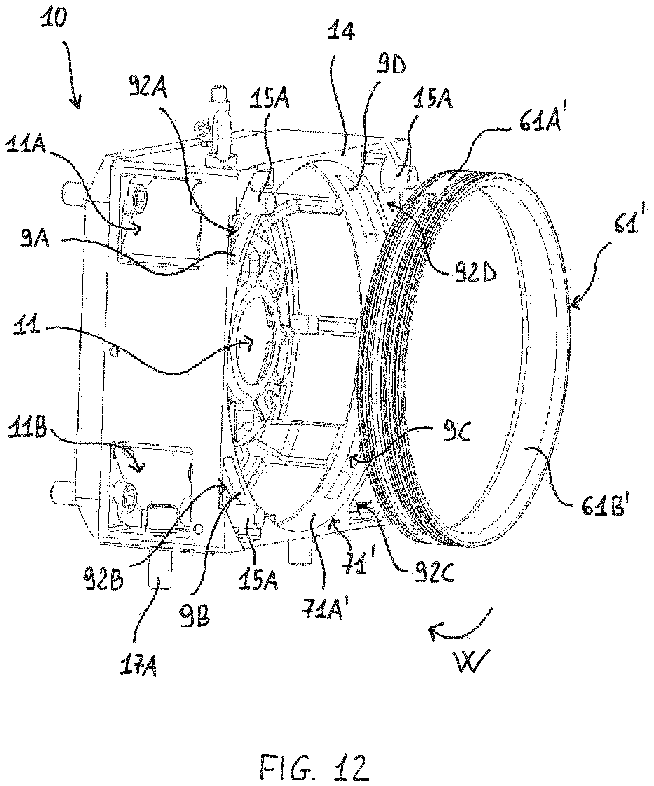

As shown in Figures 4 and 12, for the DE 10 the same technical solutions, just above disclosed, are provided. In particular, the DE 10 comprises four cavities 92A,92B, 92C, 92D, that develop from the transversal coupling surface 14 of DE 10, wherein each cavity faces a corresponding couple of circulation channels 101-101', 102-102', 103-103', 104-104'. Further, for each cavities 92A, 92B, 92C, 92D of the DE 10, an opening 9A-9B-9C-9D is provided in order to allow the hydraulic communication with the space defined by the coupling of the slot 51' of the ring-shaped body 61' with the seat 71', namely with the first section 81 of a corresponding hydraulic connecting channel 91. Therefore, also for the DE 10, the second section and the third section of the hydraulic connecting channel 91 are defined by the corresponding cavities 92A,92B, 92C, 92D.

As for the NE 20, also the cavities 92A,92B, 92C, 92D of the DE 10 may comprise a service opening 97A, 97B, 97C, 97D for the same purposes above indicated (see Figure 4).

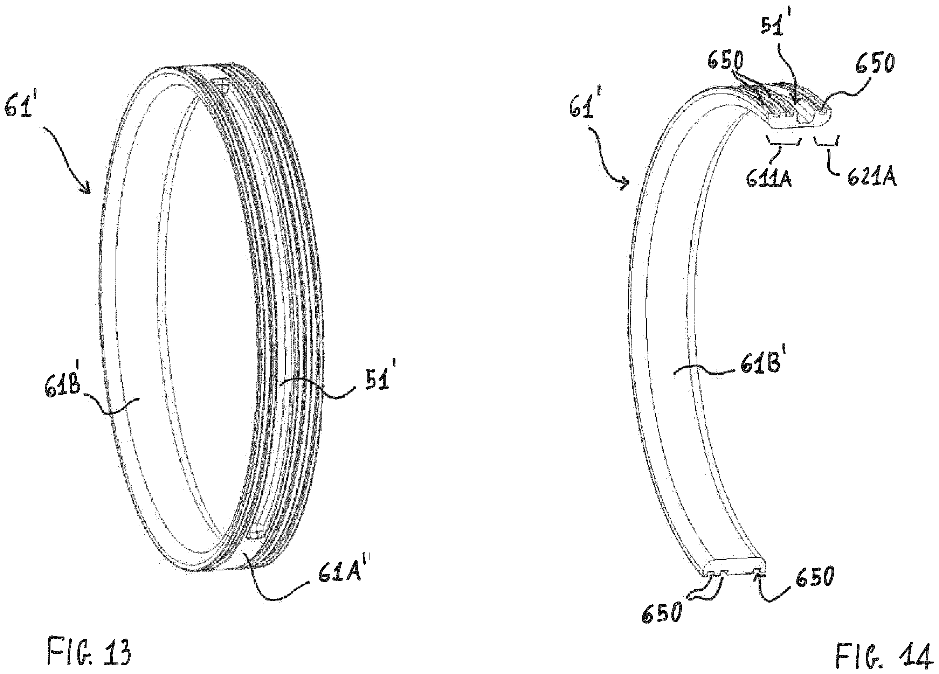

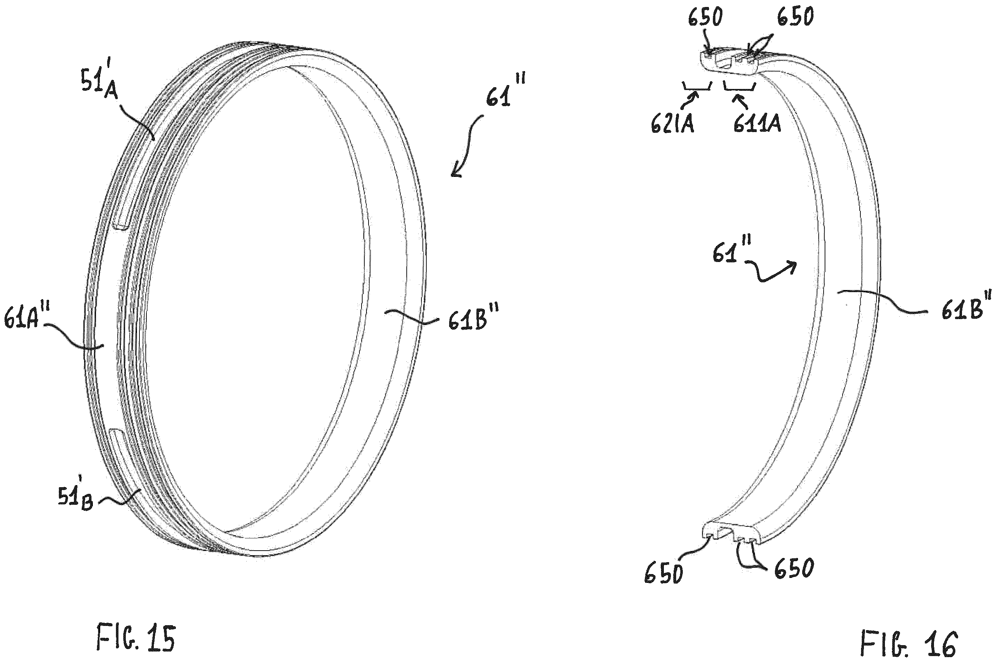

Figures 13-15 refer to possible embodiments of a ring-shaped body 61',61" couplable with a corresponding seat 71', 71" of a corresponding end-shields 10, 20. In particular, in figures 13 and 14 the ring-shaped body is indicated with the reference number 61', while the one in Figures 15 and 16 is indicated with the reference number 61". However, this indication does not want to limit in any way the use of the one of the illustrated ring-shaped body 61', 61" to a specific endshield (the NE 20 or the DE 10). In other words, each one of the two illustrated bodies 61', 61" could be installed in NE 20 or alternative in DE 10. Therefore, the ring-shaped body 61', provided in the DE 10 in Figure 4, could be installed in the NE 20, while the ring-shaped body 61", provided in the NE 20 in Figure 4A, could be installed in the DE 10. Further, for both of the endshields (10, 20), the same ring-shaped body (61', 61") could be provided.

In detail, in the embodiment shown in Figures 13 and 14, the ring-shaped body 61' has a sole slot 51' which develops from the outer surface 61A' toward the inner surface 61B'.

In particular, the section view of Figure 14 shows the U shape of the slot 51'. As shown, the outer surface 61A' comprises a first portion 611A and a second portion 621A which are separated by the slot 51', at least along the angular sector along which it develops according to what above indicated. With reference in particular to Figure 3, following the assembly of the electric motor 1, the portions 611A and 621A' are located respectively close and distal with respect to the frame 5. Each of these portions 611A', 621A' comprises at least a circumferential groove 650 which develops for an angle of 360 around the longitudinal axis 500. Such a groove 650 has the purpose to accommodate a sealing element (for example an O-ring) to seal the slot 51 and to avoid the exit of liquid from it).

As clearly illustrated in Figure 14, the first portion 611A comprises two (but they could be more) circumferential grooves 650 each of which to accommodate a sealing element. This increase the sealing effect on the part of the outer surfaces 61A' that faces the surface of the longitudinal cavity 5' of the frame 5 at the end of the circulation channels 101-101', 102-102', 103-103', 104-104', that is the part most subjected to the action of the cooling liquid (see figure 3).

According to the possible embodiment shown in figures 15 and 16, the ring-shaped body 61" comprises two slots 51'_{A}, 51'_{B} symmetrically defined with respect to a diametral plane containing the axis of the body (longitudinal axis 500 when the electric motor 1 is assembled). These slots 51'_{A}, 51'_{B} have the same configuration of that shown in figures 13 and 14 and above described. With reference to figure 5, when the ring-shaped body 61" is coupled with the seat 71', a first slot 51'_{A}, hydraulically connects a first cavity 92A' with a second cavity 92B', while a second slot 51'_{A}, 51'_{B} hydraulically connects the remaining cavities, namely the third cavity 92C' and the fourth cavity 92D'.

Overall, in the NE 20 shown in figure 5 it is possible to identify a first connecting channel 91_{A} in which the first section 81₄ is configured by the coupling of the ring-shaped body 61" with the coupling surface 71A" of the seat 71", while the second section and the third section are respectively configured by the first cavity 92A' and the second cavity 92B'. At the same time a second connecting channel 91_{B} is created, wherein the first section 81_{B} thereof is defined by the second slot 51'_{B} of the ring-shaped body 61" coupled with said coupling surface 71A". The third cavity 92C' and the fourth cavity 92D' define respectively the second section and the third section of this second connecting channel 91_{B}. According to the purposes of the present invention, each of these two connecting channels 91_{A}, 91_{B} hydraulically connects two couples 101-101', 102-102', 103-103', 104-104'.

However, as above already, for both the endshields 10, 20 the hydraulic connections between the cavities 92A, 92B, 92C, 92D-92A', 92B', 92C', 92D' can vary depending on the angular orientation chosen for the ring-shaped body 61',61" when coupled with the corresponding seat 71', 71". For example, with respect to the condition shown in Figure 5 or Figure 12, if the ring-shaped body 61' of NE 20 was rotated of an angle of 90° in the clock-wise direction (see arrow W in figure 12), then the first slot 51'_{A} would make the first cavity 92A' and third cavity 92C' hydraulically connected, while the second slot 51'_{B} would connect the second cavity 92B' and the fourth cavity 92D'.

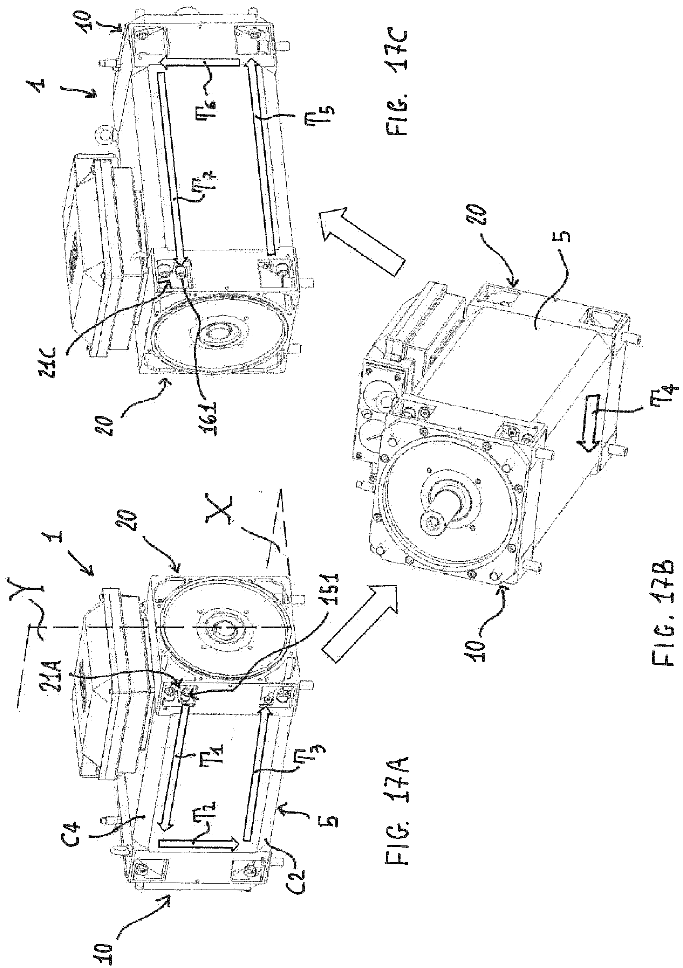

The use of an angularly adjustable ring-shaped body 61',61" having one slot or two slots, allows to configure one or more hydraulic circuit by means of which the electric motor 1 is cooled. As a fact, the angular positioning of the ring-shaped body 61', 61" determines the mode by means of which the frame 5 is cooled. On this regard, Figures 17A-17B-17C refer a first cooling mode of the electric motor 1 shown in figures 1 and 2.

In figure 17A, an installation plane X is indicated. With respect to such a plane X, the circulation channels 102-102', 103-103' are hereinbelow named *"couples of bottom channels"* since defined respectively along a corresponding bottom corner C1, C2. The other circulation channels 101-101', 104-104' are named *"couples of upper channels"* since defined along corresponding upper corners C3, C4 of the frame 5.

The NE 20 of the embodiment of Figures 17A-17B-17C contains a ring-shaped body angularly adjusted so as to connect hydraulically the two couples of bottom channels 102-102', 103-103'. For this purpose, the ring-shaped body 61" of the NE 20 may have a sole slot. Indeed, the DE 10 contains a ring-shaped body 61' having two slots according to what above disclosed and shown in Figures 15-16. In particular, the ring-shaped body 61' of DE 10 is adjusted so that each of said two slots 51'_{A}, 51'_{B} hydraulically connects one channel of the couple of upper channels 101-101', 104-104', with a corresponding one of the bottom channels 102-102', 103-103' defined on the same side with respect to reference plane Y, containing the longitudinal axis 500 and orthogonal to the installation plane X.

With reference to figure 17A, by means of a hydraulic inlet connector 151, at the NE 20 the cooling fluid is inserted in a first couple of upper channels (101-101'). Such a connector 151 is arranged in a corresponding of the external open cavity 21A provided by the structure of the NE 20. As shown by the arrows of Figure 17A, the cooling fluid crosses longitudinally the frame 5 (arrow T1) so as to reach the DE 10 wherein it is diverted (arrow T2) by the ring-shaped body 61' (in particular by a first slot 51'_{A}) to the entry of the of first couple of bottom channels (102, 102'). Then, the cooling fluid comes back to the NE 20 (arrow T3) to be diverted, by the corresponding ring-shaped body 61', to the second couple of circulating bottom channels (103-103') provided on the other side of the frame 5 (arrow T4 in Figure 17B). With reference to Figure 17C, the cooling fluid flows newly towards the DE 10 (arrow T5) wherein it is diverted to the second couple of upper channels (104, 104') by a second slot 51'_{B} of the ring-shaped body 61' provided in the DE 10 (see arrow T6). Finally, the cooling fluid comes back to the NE 20 (arrow T7) to exit by means of an outer hydraulic connector 161 arranged in a corresponding second external open cavity 21B of the NE 20.

Therefore, in the embodiment shown in Figures 17A-17B-17C, in view of the configuration of the hydraulic circuit, the same flow rate of cooling fluid flows four times longitudinally along the frame 5.

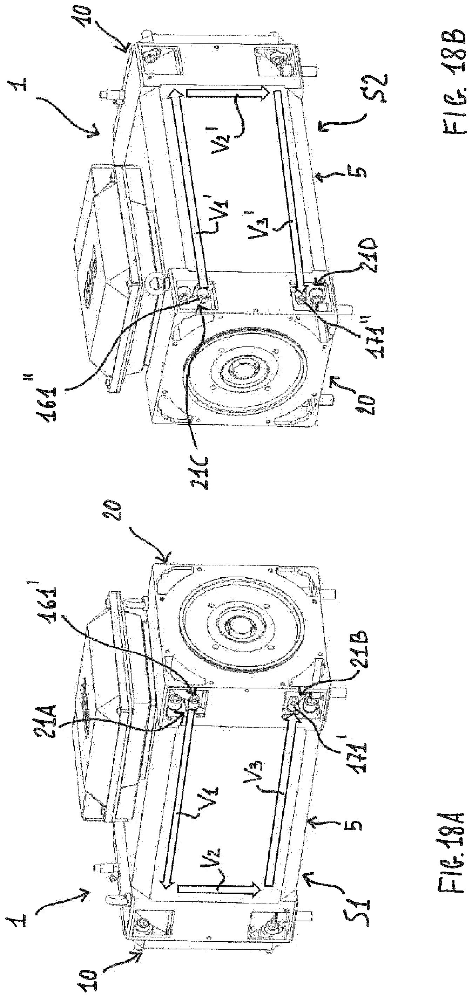

Figures 18A and 18B refer to a second cooling mode of the electric motor 1 of Figure 1. Also in this case, the DE 10 contains a ring-shaped body 61' having two slots 51'_{A}, 51'_{B} and adjusted with the same purposes above indicated for the solution of Figures 17A-17B-17C. Instead, the NE 20 contains a ring-shaped element without any slot so as to avoid any hydraulic communication between the couples of circulation channels (both upper and bottom). This solution results in two hydraulic circulation circuits each of which defined on a side of the frame 5. These circuits are symmetric with respect to the plane Y above defined. The arrows (V₁-V₂-V₃ and V₁', V₂', V₃') in Figures 18A and 18B clearly show the fluid circulation direction in the two circuits. As shown, for each of the two sides (indicated with S1 and S2) of the frame 5, a hydraulic inlet connector 161'-161" is arranged at an upper external open cavity 21A, 21C of the NE 20, while a hydraulic outlet connector 171', 171" is arranged at a bottom external open 21B, 21D of the NE 20. In this case, for each of the circuits, the cooling fluid flows twice longitudinally along the frame 5.

In view of what above, the use of the ring-shaped body above (with none, one or two slots) allows to configure different cooling modes depending on the installation, the space available for hydraulic connections and the operative conditions required to the electric motor, and in particular, depending on the cooling circuit.

The electric motor, according to the invention, can be easily realized at industrial levels. Thus, it can be easily manufactured at competitive costs with similar installations of the state of the art.

## Claims

1. Liquid cooled electric motor (1) comprising:
- a frame (5) that develops along a longitudinal axis (500);
- a first endshield (10) and a second endshield (20) connected at opposite ends (51,52) of said frame (5);
- a stator assembly (2) and a rotor assembly (30), wherein said stator assembly (2) is arranged, at least partially, in a longitudinal cavity (5A) of said frame (5) and wherein said rotor assembly (30) is arranged, at least partially, in a longitudinal space defined by said stator assembly (2) and supported, at opposite ends, by said endshields (10, 20) so as to rotate about said longitudinal axis (500);
liquid cooling means to dissipate the heat generated during the operation of said electric motor (1), wherein said cooling means comprise a plurality of circulation channels (101-101', 102-102', 103-103', 104-104') defined through said frame (5) for the circulation of a cooling fluid, and at least one hydraulic connecting channel (91,91_{A},91_{B}) for connecting hydraulically two of said circulation channels (101-101', 102-102', 103-103', 104-104') at one of said endshields (10,20),
**characterized in that** said at least one hydraulic connecting channel (91,91_{A},91_{B}) comprises at least a first section (81,81_{A},81_{B}) configured by the coupling of a collector element (61',61") with a seat (71', 71") defined by said one of said endshields (10, 20), wherein said seat (71', 71") has a coupling surface (71A', 71A") that develops around said longitudinal axis (500), said collector element (61', 61") being a ring-shaped body with an outer surface (61A', 61A") and an inner surface (61B', 61B'') wherein said outer surface (61A', 61A") couples with said coupling surface (71A', 71A") of said seat (71', 71"), wherein said outer surface (61A', 61A") and said coupling surface (71A', 71A") are shaped so as to configure said first section (81,81_{A},81_{B}) of said hydraulic connecting channel (91,91_{A},91_{B}) following their coupling.

2. Electric motor (1) according to Claim 1, wherein said at least one hydraulic connecting channel (91,91_{A},91_{B}) comprises a second section and a third section, wherein said first section (91,91_{A},91_{B}) is comprised between said second section and said third section, and wherein said second section and said third section make said first section (91,91_{A},91_{B}) communicating with a corresponding of said circulation channels (101-101', 102-102', 103-103', 104-104').

3. **Electric** motor (1) according to claim 1 or 2, wherein said ring-shaped body (61', 61") comprises a slot (51", 51'_{A}, 51'_{B}) that develops from the outer surfaces (61A', 61A") along an angular sector around said longitudinal axis (500), wherein said first section (81,81_{A},81_{B}) of said hydraulic connecting channel (91,91_{A},91_{B}) is configured by the coupling surface (71A', 71A") of the seat (71', 71") and by the surfaces defining such at least one slot (51", 51'_{A}, 51'_{B}) of said ring-shaped body (61', 61").

4. Electric motor (1) according to Claim 2 or 3, wherein said second section and said third section are defined by two cavities (92A, 92B, 92C, 92D - 92A', 92B', 92C', 92D') of said one of said endshield (10,20), wherein each cavity (92A, 92B, 92C, 92D - 92A', 92B', 92C', 92D') communicates with at least one of said circulation channels (101-101', 102-102', 103-103', 104-104'), and wherein at least two of said cavities comprises a corresponding opening (9A, 9B, 9C, 9D- 9A'-9B'-9C'-9D') that makes the corresponding cavity (92A, 92B, 92C, 92D - 92A', 92B', 92C', 92D') communicating with said first section (81,81_{A},81_{B}) of said hydraulic connecting channel (91,91_{A},91_{B}).

5. Electric motor (1) according to claim 4 when depending on Claim 3, wherein said opening (9A, 9B, 9C, 9D- 9A'-9B'-9C'-9D') is defined at the coupling surface (71A', 71A") of said seat (71',71"), said ring-shaped body (61A', 61A") being coupled with said seat (71', 71") so that said slot (51", 51'_{A}, 51'_{B}) communicates with two of the cavities (92A, 92B, 92C, 92D - 92A', 92B', 92C', 92D') by the corresponding openings (9A, 9B, 9C, 9D- 9A'-9B'-9C'-9D').

6. Electric motor (1) according to anyone of the Claims 3-5, wherein said ring-shaped body (61') comprises two slots (51'_{A}, 51'_{B}) symmetrically defined with respect to a diametral plane containing said longitudinal axis (500), wherein when said ring-shaped body (61') is coupled with the seat (71'), a first slot (51'_{A}) hydraulically connects a first cavity (92A) with a second cavity (92B) and a second slot (51'_{B}) hydraulically connects a third cavity (92C) and a fourth cavity (92D).

7. Electric motor (1) according to any of the previous claims, wherein said outer surface (61A', 61A") of said ring-shaped body (61', 61") comprises a first portion (611A') and a second portion (621A') which are separated by said at least one slot (51', 51'_{A}, 51'_{B}), at least along the angular sector along which it develops, wherein each of said portions (611A', 621A') comprises at least a circumferential groove (650) which develops for an angle of 360° around the longitudinal axis (500), wherein such groove accommodates a sealing element.

8. Electric motor (1) according to Claim 7, wherein said first portion (611A') is closer to said frame (5) than said second portion (621A') and wherein said first portion (611A') comprises two or more circumferential grooves (650) each of which to accommodate a sealing element.

9. Electric motor (1) according to anyone of the claims 1-8, wherein said frame (5) has a rectangular shaped cross section, wherein said cross section is considered on a plane orthogonal to said longitudinal axis (500).

10. Electric motor (1) according to any of the claims 1-9, wherein at least one of said endshields (10, 20) has a prismatic shape defined by four side external surfaces (12A, 12B, 12C, 12D-22A, 22B, 22C, 22D) that develop on planes two by two parallel.

11. Electric motor (1) according to claim 10, wherein said at least one of said endshields (10,20) comprises four external open cavities (11A, 11B, 11C, 11D- 21A, 21B, 21C, 21D) each of which defined at one of its corners, wherein each corner is identified by two external surfaces (12A, 12B, 12C, 12D-22A, 22B, 22C, 22D) of the endshield (10,20), wherein said open cavities (11A, 11B, 11C, 11D- 21A, 21B, 21C, 21D) accommodate connecting means (15A, 15B) to connect said frame to the endshield (10,20) and/or to connect a hydraulic connector (161, 171) to feed or to discharge the cooling fluid flowing in said circulation channels (101-101', 102-102', 103-103', 104-104').

12. Electric motor (1) according to anyone of the claims 1-11, wherein said frame (5) is obtained by extrusion process and said circulation channels (101-101', 102-102', 103-103', 104-104') are defined by means of such extrusion process.

13. Electric motor (1) according to anyone of the claims 9-12, wherein said plurality of circulation channels (101-101', 102-102', 103-103', 104-104') comprises a first couple (101-101'), a second couple (102-102'), a third couple (103- 103') and a fourth couple (104-104') of circulation channels wherein each of these couples is defined at a corresponding corner (C1, C2, C3, C4) of said frame (5).

14. Electric motor (1) according to claim 13, wherein for each of said couples of circulation channels (101-101', 102-102', 103-103', 104-104'), the corresponding two channels are symmetrically arranged with respect to a radial plane (400) containing said longitudinal axis (500), wherein said radial plane (400) is a symmetric plane also for the corresponding corner (C1, C2, C3, C4).

## Patentansprüche

1. Flüssigkeitsgekühlter Elektromotor (1), der Folgendes umfasst:
- einen Rahmen (5), der sich entlang einer Längsachse (500) entfaltet;
- eine erste Endabschirmung (10) und eine zweite Endabschirmung (20), die an gegenüberliegenden Enden (51, 52) des Rahmens (5) verbunden sind;
- eine Statoranordnung (2) und eine Rotoranordnung (30), wobei die Statoranordnung (2) zumindest teilweise in einem Längshohlraum (5A) des Rahmens (5) angeordnet ist und wobei die Rotoranordnung (30) zumindest teilweise in einem Längsraum angeordnet ist, der durch die Statoranordnung (2) definiert ist, und an gegenüberliegenden Enden durch die Endabschirmungen (10, 20) so gestützt ist, dass sie sich um die Längsachse (500) dreht;
Flüssigkeitskühlmittel zum Abführen der während des Betriebs des Elektromotors (1) erzeugten Wärme, wobei die Kühlmittel eine Vielzahl von Zirkulationskanälen (101-101', 102-102', 103-103', 104-104'), die durch den Rahmen (5) hindurch zur Zirkulation eines Kühlfluids definiert sind, und mindestens einen hydraulischen Verbindungskanal (91, 91_{A}, 91_{B}) zum hydraulischen Verbinden von zwei der Zirkulationskanäle (101-101', 102-102', 103-103', 104-104') an einer der Endabschirmungen (10, 20) umfassen,
**dadurch gekennzeichnet, dass** der mindestens eine hydraulische Verbindungskanal (91, 91_{A}, 91_{B}) mindestens einen ersten Abschnitt (81, 81_{A}, 81_{B}) umfasst, der durch die Kopplung eines Kollektorelements (61', 61") mit einem Sitz (71', 71") ausgebildet ist, der durch die eine der Endabschirmungen (10, 20) definiert ist, wobei der Sitz (71', 71") eine Kopplungsfläche (71A', 71A") aufweist, die sich um die Längsachse (500) entfaltet, wobei das Kollektorelement (61', 61") ein ringförmiger Körper mit einer Außenfläche (61A', 61A") und einer Innenfläche (61B', 61B") ist, wobei die Außenfläche (61A', 61A") mit der Kopplungsfläche (71A', 71A") des Sitzes (71', 71") gekoppelt ist, wobei die Außenfläche (61A', 61A") und die Kopplungsfläche (71A', 71A") derart geformt sind, dass sie nach ihrer Kopplung den ersten Abschnitt (81, 81_{A}, 81_{B}) des hydraulischen Verbindungskanals (91, 91_{A}, 91_{B}) ausbilden.

2. Elektromotor (1) nach Anspruch 1, wobei der mindestens eine hydraulische Verbindungskanal (91, 91_{A}, 91_{B}) einen zweiten Abschnitt und einen dritten Abschnitt umfasst, wobei der erste Abschnitt (91, 91_{A}, 91_{B}) zwischen dem zweiten Abschnitt und dem dritten Abschnitt enthalten ist, und wobei der zweite Abschnitt und der dritte Abschnitt den ersten Abschnitt (91, 91_{A}, 91_{B}) mit einem entsprechenden der Zirkulationskanäle (101-101', 102-102', 103-103', 104-104') in Kommunikation bringen.

3. Elektromotor (1) nach Anspruch 1 oder 2, wobei der ringförmige Körper (61', 61") einen Schlitz (51", 51'_{A}, 51'_{B}) umfasst, der sich von den Außenflächen (61A', 61A") entlang eines Winkelsektors um die Längsachse (500) entfaltet, wobei der erste Abschnitt (81, 81_{A}, 81_{B}) des hydraulischen Verbindungskanals (91, 91_{A}, 91_{B}) durch die Kopplungsfläche (71A', 71A") des Sitzes (71', 71") und durch die Flächen ausgebildet ist, die mindestens einen solchen Schlitz (51", 51'_{A}, 51'_{B}) des ringförmigen Körpers (61', 61") definieren.

4. Elektromotor (1) nach Anspruch 2 oder 3, wobei der zweite Abschnitt und der dritte Abschnitt durch zwei Hohlräume (92A, 92B, 92C, 92D - 92A', 92B', 92C', 92D') der einen der Endabschirmungen (10, 20) definiert sind, wobei jeder Hohlraum (92A, 92B, 92C, 92D - 92A', 92B', 92C', 92D') mit mindestens einem der Zirkulationskanäle (101-101', 102-102', 103-103', 104-104') kommuniziert, und wobei mindestens zwei der Hohlräume eine entsprechende Öffnung (9A, 9B, 9C, 9D- 9A'-9B'-9C'-9D') umfassen, die den entsprechenden Hohlraum (92A, 92B, 92C, 92D - 92A', 92B', 92C', 92D') mit dem ersten Abschnitt (81, 81_{A}, 81_{B}) des hydraulischen Verbindungskanals (91, 91_{A}, 91_{B}) in Kommunikation bringen.

5. Elektromotor (1) nach Anspruch 4, wenn abhängig von Anspruch 3, wobei die Öffnung (9A, 9B, 9C, 9D- 9A'-9B'-9C'-9D') an der Kopplungsfläche (71A', 71A") des Sitzes (71', 71") definiert ist, wobei der ringförmige Körper (61A', 61A") mit dem Sitz (71', 71") derart gekoppelt ist, dass der Schlitz (51", 51'_{A}, 51'_{B}) durch die entsprechenden Öffnungen (9A, 9B, 9C, 9D- 9A'-9B'-9C'-9D') mit zwei der Hohlräume (92A, 92B, 92C, 92D - 92A', 92B', 92C', 92D') kommuniziert.

6. Elektromotor (1) nach einem der Ansprüche 3-5, wobei der ringförmige Körper (61') zwei Schlitze (51'_{A}, 51'_{B}) umfasst, die symmetrisch in Bezug auf eine diametrale Ebene definiert sind, die die Längsachse (500) enthält, wobei, wenn der ringförmige Körper (61') mit dem Sitz (71') gekoppelt ist, ein erster Schlitz (51'_{A}) einen ersten Hohlraum (92A) mit einem zweiten Hohlraum (92B) hydraulisch verbindet und ein zweiter Schlitz (51'_{B}) einen dritten Hohlraum (92C) und einen vierten Hohlraum (92D) hydraulisch verbindet.

7. Elektromotor (1) nach einem der vorhergehenden Ansprüche, wobei die Außenfläche (61A', 61A") des ringförmigen Körpers (61', 61") einen ersten Abschnitt (611A') und einen zweiten Abschnitt (621A') umfasst, die durch den mindestens einen Schlitz (51', 51'_{A}, 51'_{B}) zumindest entlang des Winkelsektors getrennt sind, an dem entlang sie sich entfaltet, wobei jeder der Abschnitte (611A', 621A') mindestens eine umlaufende Nut (650) umfasst, die sich um einen Winkel von 360° um die Längsachse (500) herum entfaltet, wobei eine solche Nut ein Dichtungselement aufnimmt.

8. Elektromotor (1) nach Anspruch 7, wobei der erste Abschnitt (611A') näher an dem Rahmen (5) liegt als der zweite Abschnitt (621A') und wobei der erste Abschnitt (611A') zwei oder mehr umlaufende Nuten (650) umfasst, von denen jede ein Dichtungselement aufnehmen soll.

9. Elektromotor (1) nach einem der Ansprüche 1-8, wobei der Rahmen (5) einen rechteckigen Querschnitt aufweist, wobei der Querschnitt auf einer Ebene orthogonal zu der Längsachse (500) betrachtet wird.

10. Elektromotor (1) nach einem der Ansprüche 1-9, wobei mindestens eine der Endabschirmungen (10, 20) eine prismatische Form aufweist, die durch vier seitliche Außenflächen (12A, 12B, 12C, 12D-22A, 22B, 22C, 22D) definiert ist, die sich auf Ebenen paarweise parallel entfalten.

11. Elektromotor (1) nach Anspruch 10, wobei die mindestens eine der Endabschirmungen (10, 20) vier äußere offene Hohlräume (11A, 11B, 11C, 11D- 21A, 21B, 21C, 21D) umfasst, die jeweils an einer ihrer Ecken definiert sind, wobei jede Ecke durch zwei Außenflächen (12A, 12B, 12C, 12D-22A, 22B, 22C, 22D) der Endabschirmung (10, 20) bestimmt ist, wobei die offenen Hohlräume (11A, 11B, 11C, 11D- 21A, 21B, 21C, 21D) Verbindungsmittel (15A, 15B) aufnehmen, um den Rahmen mit der Endabschirmung (10, 20) zu verbinden und/oder um einen hydraulischen Verbinder (161, 171) zu verbinden, um das in den Zirkulationskanälen (101-101', 102-102', 103-103', 104-104') strömende Kühlfluid zuzuführen oder abzuführen.

12. Elektromotor (1) nach einem der Ansprüche 1-11, wobei der Rahmen (5) durch einen Extrusionsprozess erhalten wird und die Zirkulationskanäle (101-101', 102-102', 103-103', 104-104') mittels eines solchen Extrusionsprozesses definiert werden.

13. Elektromotor (1) nach einem der Ansprüche 9-12, wobei die Vielzahl von Zirkulationskanälen (101-101', 102-102', 103-103', 104-104') ein erstes Paar (101-101'), ein zweites Paar (102-102'), ein drittes Paar (103- 103') und ein viertes Paar (104-104') von Zirkulationskanälen umfasst, wobei jedes der Paare an einer entsprechenden Ecke (C1, C2, C3, C4) des Rahmens (5) definiert ist.

14. Elektromotor (1) nach Anspruch 13, wobei bei jedem der Paare von Zirkulationskanälen (101-101', 102-102', 103-103', 104-104') die entsprechenden zwei Kanäle symmetrisch in Bezug auf eine Radialebene (400) angeordnet sind, die die Längsachse (500) enthält, wobei die Radialebene (400) auch für die entsprechende Ecke (C1, C2, C3, C4) eine symmetrische Ebene ist.

## Revendications

1. Moteur électrique refroidi par liquide (1), comprenant :
- un bâti (5) qui se développe le long d'un axe longitudinal (500) ;
- un premier bouclier d'extrémité (10) et un second bouclier d'extrémité (20) raccordés au niveau d'extrémités opposées (51, 52) dudit bâti (5) ;
- un ensemble stator (2) et un ensemble rotor (30), dans lequel ledit ensemble stator (2) est agencé, au moins partiellement, dans une cavité longitudinale (5A) dudit bâti (5) et dans lequel ledit ensemble rotor (30) est agencé, au moins partiellement, dans un espace longitudinal défini par ledit ensemble stator (2) et supporté, à des extrémités opposées, par lesdits boucliers d'extrémité (10, 20) afin de tourner autour dudit axe longitudinal (500) ;
des moyens de refroidissement à liquide pour dissiper la chaleur générée durant le fonctionnement dudit moteur électrique (1), dans lequel lesdits moyens de refroidissement comprennent une pluralité de canaux de circulation (101-101', 102-102', 103-103', 104-104') définis à travers ledit bâti (5) pour la circulation d'un fluide de refroidissement, et au moins un canal de raccordement hydraulique (91,91_{A},91_{B}) destinés à raccorder hydrauliquement deux desdits canaux de circulation (101-101', 102-102', 103-103', 104-104') au niveau d'un desdits boucliers d'extrémité (10, 20),
**caractérisé en ce que** ledit au moins un canal de raccordement hydraulique (91,91_{A},91_{B}) comprend au moins une première section (81,81_{A},81_{B}) configurée par le couplage d'un élément collecteur (61', 61") à un siège (71', 71") défini par ledit un desdits boucliers d'extrémité (10, 20), dans lequel ledit siège (71', 71") a une surface de couplage (71A', 71A") qui se développe autour dudit axe longitudinal (500), ledit élément collecteur (61', 61") étant un corps de forme annulaire avec une surface extérieure (61A', 61A") et une surface intérieure (61B', 61B") dans lequel ladite surface extérieure (61A', 61A") se couple à ladite surface de couplage (71A', 71A") dudit siège (71', 71"), dans lequel ladite surface extérieure (61A', 61A") et ladite surface de couplage (71A', 71A") sont formées afin de configurer ladite première section (81,81_{A},81_{B}) dudit canal de raccordement hydraulique (91,91_{A},91_{B}) suivant leur couplage.

2. Moteur électrique (1) selon la revendication 1, dans lequel ledit au moins un canal de raccordement hydraulique (91,91_{A},91_{B}) comprend une deuxième section et une troisième section, dans lequel ladite première section (91,91_{A},91_{B}) est comprise entre ladite deuxième section et ladite troisième section, et dans lequel ladite deuxième section et ladite troisième section amènent ladite première section (91,91_{A},91_{B}) à communiquer avec un correspondant desdits canaux de circulation (101-101', 102-102', 103-103', 104-104').

3. Moteur électrique (1) selon la revendication 1 ou 2, dans lequel ledit corps de forme annulaire (61', 61") comprend une fente (51", 51'_{A}, 51'_{B}) qui se développe depuis les surfaces extérieures (61A', 61A") le long d'un secteur angulaire autour dudit axe longitudinal (500), dans lequel ladite première section (81,81_{A},81_{B}) dudit canal de raccordement hydraulique (91,91_{A},91_{B}) est configurée par la surface de couplage (71A', 71A") du siège (71', 71") et par les surfaces définissant au moins une telle fente (51", 51'_{A}, 51'_{B}) dudit corps de forme annulaire (61, 61").

4. Moteur électrique (1) selon la revendication 2 ou 3, dans lequel ladite deuxième section et ladite troisième section sont définies par deux cavités (92A, 92B, 92C, 92D - 92A', 92B', 92C', 92D') dudit un desdits boucliers d'extrémité (10, 20), dans lequel chaque cavité (92A, 92B, 92C, 92D - 92A', 92B', 92C', 92D') communique avec au moins un desdits canaux de circulation (101-101', 102-102', 103-103', 104-104'), et dans lequel au moins deux desdites cavités comprend une ouverture correspondante (9A, 9B, 9C, 9D-9A'-9B'-9C'-9D') qui amène la cavité correspondante (92A, 92B, 92C, 92D - 92A', 92B', 92C', 92D') à communiquer avec ladite première section (81,81_{A},81_{B}) dudit canal de raccordement hydraulique (91,91_{A},91_{B}).

5. Moteur électrique (1) selon la revendication 4 lorsqu'elle dépend de la revendication 3, dans lequel ladite ouverture (9A, 9B, 9C, 9D- 9A'-9B'-9C'-9D') est définie sur la surface de couplage (71A', 71A") dudit siège (71',71"), ledit corps de forme annulaire (61A', 61A") étant couplé audit siège (71', 71") de telle sorte que ladite fente (51", 51'_{A}, 51'_{B}) communique avec deux des cavités (92A, 92B, 92C, 92D - 92A', 92B', 92C', 92D') par l'intermédiaire des ouvertures correspondantes (9A, 9B, 9C, 9D- 9A'-9B'-9C'-9D').

6. Moteur électrique (1) selon l'une quelconque des revendications 3 à 5, dans lequel ledit corps de forme annulaire (61') comprend deux fentes (51'_{A}, 51'_{B}) symétriquement définies par rapport à un plan diamétral contenant ledit axe longitudinal (500), dans lequel, lorsque ledit corps de forme annulaire (61') est couplé au siège (71'), une première fente (51'_{A}) raccorde hydrauliquement une première cavité (92A) à une deuxième cavité (92B) et une second fente (51'_{B}) raccorde hydrauliquement une troisième cavité (92C) et une quatrième cavité (92D).

7. Moteur électrique (1) selon de quelconques des revendications précédentes, dans lequel ladite surface extérieure (61A', 61A") dudit corps de forme annulaire (61', 61") comprend une première partie (611A') et une seconde partie (621A') qui sont séparées par ladite au moins une fente (51', 51'_{A}, 51'_{B}), au moins le long du secteur angulaire le long duquel elle se développe, dans lequel chacune desdites parties (611A', 621A') comprend au moins une rainure circonférentielle (650) qui se développe sur un angle de 360° autour de l'axe longitudinal (500), dans lequel une telle rainure loge un élément d'étanchéité.

8. Moteur électrique (1) selon la revendication 7, dans lequel ladite première partie (611A') est plus près dudit bâti (5) que ladite seconde partie (621A') et dans lequel ladite première partie (611A') comprend deux, ou plus, rainures circonférentielles (650) dont chacune est destinée à loger un élément d'étanchéité.

9. Moteur électrique (1) selon l'une quelconque des revendications 1 à 8, dans lequel ledit bâti (5) a une section transversale de forme rectangulaire, dans lequel ladite section transversale est considérée sur un plan orthogonal audit axe longitudinal (500).

10. Moteur électrique (1) selon l'une quelconque des revendications 1 à 9, dans lequel au moins un desdits boucliers d'extrémité (10, 20) a une forme prismatique définie par quatre surfaces externes latérales (12A, 12B, 12C, 12D-22A, 22B, 22C, 22D) qui se développent sur des plans deux par deux parallèles.

11. Moteur électrique (1) selon la revendication 10, dans lequel ledit au moins un desdits boucliers d'extrémité (10, 20) comprend quatre cavités ouvertes externes (11A, 11B, 11C, 11D- 21A, 21B, 21C, 21D) dont chacune est définie à un de ses coins, dans lequel chaque coin est identifié par deux surfaces externes (12A, 12B, 12C, 12D-22A, 22B, 22C, 22D) du bouclier d'extrémité (10, 20), dans lequel lesdites cavités ouvertes (11A, 11B, 11C, 11D-21A, 21B, 21C, 21D) logent des moyens de raccordement (15A, 15B) pour raccorder ledit bâti au bouclier d'extrémité (10, 20) et/ou pour raccorder un raccord hydraulique (161, 171) pour effectuer l'alimentation ou pour effectuer l'évacuation du fluide de refroidissement s'écoulant dans lesdits canaux de circulation (101-101', 102-102', 103-103', 104-104').

12. Moteur électrique (1) selon l'une quelconque des revendications 1 à 11, dans lequel ledit bâti (5) est obtenu par un processus d'extrusion et lesdits canaux de circulation (101-101', 102-102', 103-103', 104-104') sont définis au moyen d'un tel processus d'extrusion.

13. Moteur électrique (1) selon l'une quelconque des revendications 9 à 12, dans lequel ladite pluralité de canaux de circulation (101-101', 102-102', 103-103', 104-104') comprend un première paire (101-101'), une deuxième paire (102-102'), une troisième paire (103-103'), et une quatrième paire (104-104') de canaux de circulation, dans lequel chacune de ces paires est définie à un coin correspondant (C1, C2, C3, C4) dudit bâti (5).

14. Moteur électrique (1) selon la revendication 13, dans lequel pour chacune desdites paires de canaux de circulation (101-101', 102-102', 103-103', 104-104'), les deux canaux correspondants sont symétriquement agencés par rapport à un plan radial (400) contenant ledit axe longitudinal (500), dans lequel ledit plan radial (400) est un plan symétrique également pour le coin correspondant (C1, C2, C3, C4).
